# EUROPÄISCHE PATENTSCHRIFT

(11) **EP 2 697 296 B1**
(45) Veröffentlichungstag und Bekanntmachung des Hinweises auf die Patenterteilung: **22.02.2017**
(21) Anmeldenummer: 12712682.9
(22) Anmeldetag: 11.04.2012
(51) Int. Cl.: C08J 9/14, C08G 18/76, C08G 18/09, B32B 27/40, C08G 18/40, C08G 18/42, C08G 18/48, C08G 18/50, C08G 18/32, C08G 18/66

(54) **VERFAHREN ZUR HERSTELLUNG VON POLYURETHAN-HARTSCHAUMSTOFFEN**
PROCESS FOR PRODUCING RIGID POLYURETHANE FOAMS
PROCÉDÉ DE FABRICATION DE MOUSSES DE POLYURÉTHANE DURES

(30) Priorität: 15.04.2011 EP 11162679
(43) Veröffentlichungstag der Anmeldung: 19.02.2014
(73) Patentinhaber: BASF SE, 67056 Ludwigshafen am Rhein (DE)
(72) Erfinder: TOMOVIC, Zeljko, 49448 Lemförde (DE); JACOBMEIER, Olaf, 32312 Lübbecke (DE); KAMPF, Gunnar, 32351 Stemwede-Haldem (DE)
(74) Vertreter: BASF IP Association
(86) Internationale Anmeldenummer: PCT/EP2012/056485
(87) Internationale Veröffentlichungsnummer: WO 2012/140025

(56) Entgegenhaltungen:
- EP-A1- 0 728 783
- EP-A1- 2 386 585
- EP-A1- 2 461 022
- EP-A2- 0 009 967
- EP-A2- 1 510 543
- EP-A2- 1 512 707
- WO-A1-2005/044889
- WO-A1-2010/046361
- WO-A1-2010/111021
- WO-A2-02/50161
- DE-A1- 10 009 649
- DE-A1- 19 817 507
- DE-A1-102004 044 915
- JP-A- 6 100 652
- JP-A- 2000 281 826
- US-A- 6 114 402

## Beschreibung

Gegenstand der Erfindung ist ein Verfahren zur Herstellung von Polyurethan-Hartschaumstoffen und nach dem erfindungsgemäßen Verfahren hergestellte Polyurethan-Hartschaumstoffe sowie eine Polyolkomponente.

Polyurethan-Hartschaumstoffe sind seit langem bekannt und vielfach beschrieben. Der Einsatz der Polyurethan-Hartschaumstoffe erfolgt vorwiegend zur Wärmeisolation, beispielsweise in Kältegeräten, Transportmitteln oder Gebäuden sowie zur Herstellung von Bauelementen, insbesondere Sandwich-Elementen.

Ein wesentliches Einsatzgebiet der Polyurethan-Hartschaumstoffe sind Verbundelemente. Die Herstellung von Verbundelementen aus insbesondere metallischen Deckschichten und einem Kern aus Schaumstoffen auf Isocyanatbasis, zumeist Polyurethan- (PUR) oder Polyisocyanurat-(PIR) Schaumstoffen, häufig auch als Sandwichelemente bezeichnet, auf kontinuierlich arbeitenden Doppelbandanlagen wird gegenwärtig in großem Umfang praktiziert. Neben Sandwichelementen zur Kühlhausisolierung gewinnen Elemente mit farbigen Deckschichten zur Gestaltung von Fassaden verschiedenster Gebäude immer mehr an Bedeutung. Als Deckschichten werden dabei neben beschichteten Stahlblechen auch Edelstahl-, Kupfer- oder Aluminiumbleche eingesetzt.

Es ist wichtig, dass die Polyurethan-Hartschaumstoffe die Hohlräume gleichmäßig und lunkerfrei ausfüllen, so dass durch möglichst gute Verbindung mit den Deckschichten eine stabile Konstruktion erzeugt wird, die für eine gute thermische Isolation sorgt. Um Schaumfehlstellen zu verhindern, muss hierzu das schaumfähige PU-Reaktionsgemisch innerhalb einer kurzen Zeit in den zu isolierenden Hohlraum eingeführt werden. Zum Ausschäumen derartiger Gegenstände werden üblicherweise Niederdruck- oder vorzugsweise Hochdruckmaschinen eingesetzt.

Eine zusammenfassende Übersicht über die Herstellung von Polyurethan-Hartschaumstoffen und ihre Verwendung als Deck- oder Kernschicht in Verbundelementen sowie ihre Anwendung als Dämmschicht in der Kühl- oder Heizungstechnik findet sich z.B. in "Polyurethane", Kunststoff-Handbuch, Band 7, 3. Auflage 1993, herausgegeben von Dr. Günter Oertel, Carl-Hanser-Verlag, München/Wien.

Geeignete Polyurethan-Hartschaumstoffe können in bekannter Weise durch Umsetzung von organischen Polyisocyanaten mit einer oder mehreren Verbindungen mit mindestens zwei reaktiven Wasserstoffatomen in Gegenwart von Treibmitteln, Katalysatoren und gegebenenfalls Hilfsmitteln und/oder Zusatzstoffen hergestellt werden.

Als Verbindungen mit mindestens zwei mit Isocyanatgruppen reaktiven Wasserstoffatomen werden bei der Herstellung der Polyurethane vorzugsweise Polyetheralkohole und/oder Polyesteralkohole eingesetzt. Die Auswahl der Polyole erfolgt insbesondere unter Berücksichtigung der Kosten- und der gewünschten Anwendungseigenschaften (z.B. EP-A 1 632 511, US-B 6,495,722, WO 2006/108833).

Die Oberflächeneigenschaften der bekannten Polyurethan-Hartschaumstoffe sind jedoch weiterhin, insbesondere bei der Herstellung von Verbundelementen, verbesserungsbedürftig, da hiervon auch die Haftung der Deckschichten am Schaum wesentlich beeinflusst wird. Auch bei der Herstellung von Schaumstoffen nach dem Sprühschaumverfahren ist eine gute Oberfläche von großer Bedeutung.

WO 2010/111021 A1 betrifft ein Verfahren zur Herstellung eines PU-Hartschaumes, wobei als Polyolkomponente ein Gemisch eines auf Sorbitol basierenden Polypropylenoxids mit einer OH-Zahl von 480 mg KOH/g, eines auf Glycerin basierenden Polypropylenoxids mit einer OH-Zahl von 156 mg KOH/g und eines auf Ethylendiamin basierenden Polypropylenoxids mit einer OH-Zahl von 640 mg KOH/g eingesetzt wird.

JP 6 100652 A betrifft eine Polyolkomposition für einen PU-Hartschaum, enthaltend ein Polyetherpolyol B hergestellt durch ein TDA und TEOA gestartetes Alkylenoxids, ein Polyetherpolyol D hergestellt durch ein Mannich-Basen gestartetes Alkylenoxids und ein Polyetherpolyol E hergestellt durch ein EDA gestartetes Alkylenoxid.

EP 1510543 A2 beschreibt eine Polyolkomponente zur Herstellung von PU-Hartschaumstoffen, enthaltend ein Polyetherol 1 auf Basis von Sorbit (OH-Zahl 490); Polyetherol 2 auf Basis von EDA (OH-Zahl 750) und ein Polyetherol 3 auf Basis von Ethylenglykol (OH-Zahl 200).

WO 02/50161 A2 beschreibt Polyolmischungen zur Herstellung von PU-Hartschäumen, welche ein Polyetherol A gestartet mit EDA, ein Polyetherol B gestartet mit Sucrose/Propylenglykol/Wasser und ein aromatisches Polyesterpolyol enthalten.

DE 100 09 649 A1 beschreibt offenzellige PU-Hartschaumstoffe, hergestellt aus Polyolmischungen, die neben einem Polyetherol 1 auf Basis von EDA (OH-Zahl 470); einem Polyetherol 2 auf Basis von Saccharose/Glycerin (OH-Zahl 485) und einem Polyetherol 5 auf Basis von Glycerin (OH-Zahl 400) noch weitere Polyetherole und einen Ricinusglycerolester enthalten.

WO 2010/046361 A1 beschreibt ein Verfahren zur Herstellung von geschlossenzelligen PU-Hartschäumen, wobei Polyolgemische enthaltend Polyetherole auf Basis von Sorbitol, Polyetherole auf Basis von Glycerin, Polyetherole auf Basis von cycloaliphatischen Diaminen, aromatische Polyesterpolyole und Polyetherole auf Basis von TDA eingesetzt werden.

DE 198 17 507 A1 beschreibt ein Verfahren zur Herstellung von PU-Hartschaumstoffen, in welchem eine Polyolmischung A eingesetzt wird, die u.a. neben einem Polyetherpolyol auf Basis von Saccharose und einem Polyetherpolyol auf Basis von EDA, ein aromatisches Polyesterpolyol enthält.

US 6,1144402 beschreibt eine Formulierung für einen PU-Hartschaum. Als Polyolkomponente wird ein Gemisch von je 25 Gew.-Teilen N,N,N',N'-Tetrakis (2-hydroxypropyl)ethylendiamin, eines auf Sucrose basierenden Polyetherpolyols und eines auf Glycerin basierenden Polyetherpolyols (G-600) eingesetzt.

EP 1 512 707 A2 beschreibt offenzellige PU-Hartschaumstoffe, die aus Polyolmischungen hergestellt werden, die u.a. Polyetherole 1 auf Basis von EDA(OH-Zahl 470), Polyetherole 2 auf Basis von Saccharose/Glycerin (OH-Zahl 485) und Polyetherole 5 auf Basis von'Glycerin (OH-Zahl 400), sowie weitere Polyetherole und einen Ricinusglycerolester enthalten.

DE 10 2004 044915 A1 beschreibt PU-Hartschäume und Polyolmischungen, die neben einem Polyetherol 1, 2 oder 3 gestartet mit Saccharose bzw. Sorbitol (OH-Zahl 490 bzw. 500) und einem Polyetherol 4 gestartet mit EDA (OH-Zahl 750) ein aromatisches Polyesterpolyol 5 (OH-Zahl 385) enthalten.

JP 200 281826 A beschreibt PU-Hartschäume und zu deren Herstellung geeignete Polyolkomponenten, die Polyetherole A und B basierend auf EDA (OH-Zahl 750 bzw. 470), und ein aromatisches Polyesterpolyol F-I enthalten.

WO2005/044915 offenbart PU-Hartschäume und Polyolmischungen, die neben Polyetherpolyolen auf Sucrose-Basis (OH-Zahl 360), trifunktionellen Polyetherpolyolen (OH-Zahl 170) und EDA gestarteten Polyolen (OH-Zahl 640), ein auf TDA basierendes Polyol B und ein aromatisches Polyesterpolyol enthalten.

Das prioritätsältere, nicht vorveröffentlichte Dokument EP 2 461 022 A1 betrifft Kernschäume aus verstärktem PU-Schaumstoff zu deren Herstellung Polyolmischungen, enthaltend Polyetherpolyole basierend auf EDA, weitere Polyetherpolyole (f = 2.0, MG 400) und ein aromatischer Polyester verwendet werden.

Das prioritätsältere, nicht vorveröffentlichte Dokument EP 2 368 585 A1 beschreibt ein Verfahren zur Herstellung von PU-Hartschäumen und Polyolgemische, enthaltend Polyetherole auf Basis von EDA (OH-Zahl 640), Polyetherole auf Basis von Sorbitol (OH-Zahl 480) und Polyetherole auf Basis von Glycerin (OH-Zahl 156), sowie aromatische Polyesterpolyole und Polyetherole auf Basis von TDA.

Die Druckschriften EP 0 728 783 A1, EP 0 826 708 A1 und WO 2010/106067 A1 beschreiben Verfahren zur Herstellung von PU-Hartschaumstoffen, in welchen die Polyolkomponente Rizinusöl enthält. Rizinusöl kann vorteilhaft für die Oberflächeneigenschaften des Schaums sein. Andererseits kann Rizinusöl in Gegenwart von Wasser, bedingt durch eine Phasentrennung, zu einer Instabilität der Polyolkomponente führen, was zu Problemen bei der Verarbeitung führen kann. Wasser wird häufig als kostengünstiges und umweltfreundliches Treibmittel in der Polyolkomponente verwendet. Ein Nachteil des in EP 0 826 708 A1 beschriebenen Verfahrens ist neben der hohen Viskosität der Polyolkomponente auch die sehr schlechte Haftung der gebildeten PU-Hartschaumstoffe. Auch die durch das in EP 0 728 783 A1 beschriebene Verfahren hergestellten PU-Hartschaumstoffe sind bezüglich ihrer Oberflächeneigenschaften und Haftung noch verbesserungsbedürftig. Die nach der WO 2010/106067 A1 hergestellten PU-Hartschaumstoffe weisen eine gute Haftung und eine gute Oberflächenbeschaffenheit auf, sind jedoch bezüglich ihrer Lagerstabilität der Polyolkomponente bei größeren Wassermengen (> 1,5-Gew.-Teilen) noch verbesserungsbedürftig.

Es besteht daher die Aufgabe ein Verfahren zur Herstellung von Polyurethan-Hartschaumstoffen zu entwickeln, das zu Schäumen mit guter Haftung, guter Aushärtung und Oberflächenqualität führt, deren Polyolkomponente eine gute Lagerstabilität aufweist und somit gute Verarbeitungseigenschaften besitzt.

Die Aufgabe konnte überraschenderweise gelöst werden durch ein Verfahren zur Herstellung von Polyurethan-Hartschaumstoffen durch Umsetzung von
a) organischen Polyisocyanaten mit
b) Verbindungen mit mindestens zwei mit Isocycanatgruppen reaktiven Wasserstoffatomen in Anwesenheit von
c) Treibmitteln,
d) Katalysatoren, sowie gegebenenfalls
e) Hilfsmitteln und Zusatzstoffen,
dadurch gekennzeichnet, dass als Komponente b) ein Gemisch bestehend aus
b1) 20 bis 60 Gew.-Teilen eines oder mehrerer hochfunktioneller Polyetheralkohole mit Funktionalitäten von 3,5 bis 5,5 und einer Hydroxylzahl von 400 bis 550 mg KOH/g und mit hydroxylgruppenhaltigen hochfunktionellen Verbindungen als Startsubstanzen,
b2) 5 bis 15 Gew.-Teilen eines oder mehrerer Polyetheralkohole auf Basis aliphatischer Amine mit Funktionalitäten von 4 und einer Hydroxylzahl von 470 bis 800 mg KOH/g,
b3) 10 bis 30 Gew.-Teilen eines oder mehrerer Polyetheralkohole mit Funktionalitäten von 2 bis 3 und einer Hydroxylzahl von 220 bis 430 mg KOH/g, und
b4) gegebenenfalls 1 bis 5 Gew.-Teilen Wasser
eingesetzt wird.

Die gesamten Gewichtsteile b1) bis b4) der Polyolkomponente b) überschreiten definitionsgemäß nicht 100 Gewichtsteile. Die Polyolkomponente b) kann auch Katalysatoren, Stabilisatoren sowie übliche Hilfsmittel und Zusatzstoffe enthalten.

Die Bestimmung der Hydroxylzahl erfolgt gemäß der DIN 53240.

Weiterer Gegenstand der Erfindung ist die Polyolkomponente b) bestehend aus einem Gemisch aus
b1) 20 bis 60 Gew.-Teilen eines oder mehrerer hochfunktioneller Polyetheralkohole mit Funktionalitäten von 3,5 bis 5,5 und einer Hydroxylzahl von 400 bis 550 mg KOH/g und mit hydroxylgruppenhaltigen hochfunktionellen Verbindungen als Startsubstanzen,
b2) 5 bis 15 Gew.-Teilen eines oder mehrerer Polyetheralkohole auf Basis aliphatischer Amine mit Funktionalitäten von 4 und einer Hydroxylzahl von 470 bis 800 mg KOH/g,
b3) 10 bis 30 Gew.-Teilen eines oder mehrerer Polyetheralkohole mit Funktionalitäten von 1,5 bis 3 und einer Hydroxylzahl von 150 bis 450 mg KOH/g, und
b4) gegebenenfalls 1 bis 5 Gew.-Teilen Wasser.

Zu den einzelnen Komponenten, die im erfindungsgemäßen Verfahren und für die erfindungsgemäße Polyolkomponente b) eingesetzt werden, ist folgendes auszuführen:
a) Als organische Polyisocyanate kommen die an sich bekannten aliphatischen, cycloaliphatischen, araliphatischen und vorzugsweise aromatischen mehrwertigen Isocyanate in Frage.

Im Einzelnen seien beispielhaft genannt: Alkylendiisocyanate mit 4 bis 12 Kohlenstoffatomen im Alkylenrest, wie 1,12-Dodecandiisocyanat, 2-Ethyltetramethylendiisocyanat-1,4, 2-Methylpentamethylendüsocyanat-1,5, Tetramethylendiisocyanat-1,4 und vorzugsweise Hexamethylendiisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethylcyclohexan (Isophorondüsocyanat), 2,4-und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Di- und Polyisocyanate, wie z.B. 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,4'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden.

Häufig werden auch so genannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate.

Im Einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, modifiziertes 4,4'-Diphenylmethan-diisocyanat, modifizierte 4,4'- und 2,4'-Diphenylmethan-diisocyanatmischungen, oder modifiziertes Roh-MDI oder 2,4- bzw. 2,6-Toluylen-diisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylen-polyoxyethylenglykole, -triole und/oder -tetrole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus den nachfolgend beschriebenen Polyester- und/oder vorzugsweise Polyetherpolyolen und 4,4'-Diphenylmethandiisocyanat, Mischungen aus 2,4'- und 4,4'-Diphenylmethandiisocyanat, 2,4- und/oder 2,6-Toluylen-diisocyanaten oder Roh-MDI.

Bewährt haben sich ferner flüssige, Carbodiimidgruppen und/oder Isocyanuratringe enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'- und/oder 2,2'-Diphenylmethandiisocyanat und/oder 2,4- und/oder 2,6-Toluylendiisocyanat.

Die modifizierten Polyisocyanate können miteinander oder mit unmodifizierten organischen Polyisocyanaten wie z.B. 2,4'-, 4,4'-Diphenyl-methan-diisocyanat, Roh-MDI, 2,4- und/oder 2,6-Toluylen-diisocyanat gegebenenfalls gemischt werden.

Besonders bewährt und vorzugsweise zur Anwendung kommen die folgenden Polyisocyanate: Mischungen aus Toluylendiisocyanaten und Roh-MDI oder Mischungen aus modifizierten Urethangruppen enthaltenden organischen Polyisocyanaten mit einem NCO-Gehalt von 33,6 bis 15 Gew.-%, insbesondere solche auf Basis von Toluylendiisocyanaten, 4,4'-Diphenylmethan-diisocyanat, Diphenylmethandiisocyanat-Isomerengemischen oder Roh-MDI und insbesondere Roh-MDI mit einem Diphenylmethandüsocyanat-Isomerengehalt von 25 bis 80 Gew.-%, vorzugsweise von 30 bis 55 Gew.-%.
b) Die verwendeten Polyetherpolyole b1), b2) und b3) werden nach bekannten Verfahren, beispielsweise durch anionische Polymerisation mit Alkalihydroxiden, wie z.B. Natrium- oder Kaliumhydroxid oder Alkalialkoholaten, wie z.B. Natriummethylat, Natrium- oder Kaliumethylat oder Kaliumisopropylat, als Katalysatoren und unter Zusatz mindestens eines Startermoleküls, das 2 bis 8, vorzugsweise 2 bis 6, reaktive Wasserstoffatome gebunden enthält, oder durch kationische Polymerisation mit Lewis-Säuren, wie Antimonpentachlorid, Borfluorid-Etherat u.a. oder Bleicherde, als Katalysatoren aus einem oder mehreren Alkylenoxiden mit 2 bis 4 Kohlenstoffatomen im Alkylenrest hergestellt. Weiterhin können auch Multimetallcyanidverbindungen, sogenannte DMC-Katalysatoren, eingesetzt werden. Auch tertiäre Amine können als Katalysator eingesetzt werden wie z.B. Triethylamin, Tributylamin, Trimethylamin, Dimethylethanolamin und/oder Dimethylcyclohexylamin.

Geeignete Alkylenoxide zur Herstellung der Polyetherpolyole b1), b2) und b3) sind beispielsweise Ethylenoxid, 1,2-Propylenoxid, 1,3-Propylenoxid, 1,2- bzw. 2,3-Butylenoxid, Tetrahydrofuran, Styroloxid, vorzugsweise Ethylenoxid und 1,2-Propylenoxid. Die Alkylenoxide können einzeln, alternierend nacheinander oder als Mischungen verwendet werden.

Als Startermoleküle für die erfindungsgemäß verwendeten Polyetheralkohole b1), b2) und b3) kommen folgende Verbindungen in Betracht:
b1) Es werden hydroxylgruppenhaltige hochfunktionelle Verbindungen, insbesondere Zucker, Stärke oder Lignin als Startsubstanzen verwendet. Von besonderer praktischer Bedeutung sind hierbei Glucose, Sucrose und Sorbitol. Da diese Verbindungen bei den üblichen Reaktionsbedingungen der Alkoxylierung in fester Form vorliegen, ist es allgemein üblich, diese Verbindungen gemeinsam mit Koinitiatoren zu alkoxylieren. Als Koinitiatoren eignen sich besonders Wasser und mehrfunktionelle niedere Alkohole, z.B. Glyzerin, Trimethylolpropan, Pentaerythrit, Ethylenglykol, Diethylenglykol, Propylenglykol und deren Homologe.
b2) Als Startermoleküle werden insbesondere Ammoniak, mehrfunktionelle aliphatische Amine, insbesondere solche mit 2 bis 6 Kohlenstoffatomen und primären und sekundären Aminogruppen sowie Aminoalkohole mit 2 bis 6 Kohlenstoffatomen in der Hauptkette eingesetzt. Vorzugsweise eingesetzt werden Ethylendiamin, Monoalkylethylendiamine, 1,3-Propylendiamin sowie verschiedene Butylen- und Hexamethylendiamine; und als Aminoalkohole Ethanolamin, Diethanolamin und Triethanolamin.
b3) Als Startsubstanzen werden Wasser und/oder niedermolekulare zwei- oder dreifunktionelle Alkohole eingesetzt. Verwendet werden insbesondere lineare oder verzweigte Alkohole mit 2 bis 12 Kohlenstoffatomen, insbesondere solche mit 2 bis 6 Kohlenstoffatomen in der Hauptkette. Bevorzugt als Startsubstanzen eingesetzte Verbindungen sind neben Wasser z.B. Glycerin, Trimethylolpropan, Ethylenglykol, Propylenglykol, Diethylenglykol, Dipropylenglykol, Butandiol-1,4, Pentaerythrit, Hexandiol-1,6 und deren Homologe.

Als b3) können ein oder mehrere Polyetheralkohole eingesetzt werden. Bevorzugt werden ein oder mehrere Polyetheralkohole eingesetzt.

Die Polyetheralkohole b1) haben bevorzugt Funktionalitäten von 3,7 bis 5,2 und eine Hydroxylzahl von 400 bis 520 mg KOH/g und besonders bevorzugt Funktionalitäten von 3,9 bis 5 und eine Hydroxylzahl von 400 bis 500 mg KOH/g und ganz besonders bevorzugt Funktionalitäten von 4 bis 4,5 und eine Hydroxylzahl von 450 bis 500 mg KOH/g.

Der Anteil der Komponente b1) beträgt bevorzugt 30 bis 60 Gew.-Teile, besonders bevorzugt 40 bis 60 Gew. Teile.

Die Polyetheralkohole b2) haben eine Funktionalität von 4 und eine Hydroxylzahl von 470 bis 800 mg KOH/g und bevorzugt eine Funktionalität von 4 und eine Hydroxylzahl von 730-800 mg KOH/g.

Der Anteil der Komponente b2) beträgt 5 bis 15 Gew. Teile.

Die Polyetheralkohole b3) haben Funktionalitäten von 2 bis 3 und eine Hydroxylzahl von 220-430 mg KOH/g.

Bevorzugt sind Polyetheralkohole b3) mit einer Funktionalität von 3 und einer Hydroxylzahl von 380-420 mg KOH/g.

Der Anteil der Komponente b3) beträgt bevorzugt 10 bis 25 Gew.-Teile., besonders bevorzugt 10 bis 20 Gew.-Teile.
Weitere Angaben zu den verwendeten Polyetheralkoholen b1), b2) und b3) sowie ihrer Herstellung finden sich beispielsweise im Kunststoffhandbuch, Band 7 "Polyurethane", herausgegeben von Günter Oertel, Carl-Hanser-Verlag München, 3. Auflage, 1993.

Die Komponente b) kann 1 bis 5 Gew.-Teile, insbesondere 1,5 bis 5 Gew.-Teile und im ganz besonderen 2 bis 5 Gew. Teile Wasser b4) enthalten.

Gemäß einer Ausführungsform beträgt der Wasseranteil b4) 2 bis 5 Gew.-%. Diese Ausführungsform ist mit anderen Ausgestaltungen des erfindungsgemäßen Verfahrens kombinierbar.
c) Als Treibmittel für das erfindungsgemäße Verfahren können die zur Herstellung von Polyurethan-Hartschaumstoffen üblichen Treibmittel eingesetzt werden.

Als Treibmittel c) können neben Wasser noch zusätzlich allgemein bekannte chemisch und/oder physikalisch wirksame Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone, Acetale sowie anorganische und organische Verbindungen, die beim Erhitzen Stickstoff freisetzen, oder Mischungen daraus, beispielsweise (cyclo)aliphatische Kohlenwasserstoffe mit 4 bis 8 Kohlenstoffatomen, oder Fluorkohlenwasserstoffe, wie 1,1,1,3,3-Pentafluoropropan (HFC 245 fa), Trifluormethan, Difluormethane, 1,1,1,3,3-Pentafluorbutan (HFC 365 mfc), 1,1,1,2-Tetrafluorethan, Difluorethan und Heptafluorpropan.

Vorteilhafterweise werden als Treibmittel niedrigsiedende aliphatische Kohlenwasserstoffe, vorzugsweise n-Pentan und/oder iso-Pentan, insbesondere n-Pentan verwendet.

Das n-Pentan hat einen Siedepunkt von 36 °C, iso-Pentan einen Siedepunkt von 28 °C. Damit liegen die Siedepunkte in einem für den Treibvorgang günstigen Bereich.

Da die als Treibmittel geeigneten aliphatischen Kohlenwasserstoffe brennbar und explosibel sind, müssen die Verschäumungsanlagen mit den entsprechenden Sicherheitseinrichtungen ausgestattet sein, wie sie auch beim Einsatz von n-Pentan als Treibmittel notwendig sind.

Es ist vorteilhaft, die aliphatischen Kohlenwasserstoffe gemeinsam mit Wasser als Treibmittel einzusetzen. Die eingesetzte Menge an aliphatischen Kohlenwasserstoffen beträgt 2 bis 25 Gew.-%, vorzugsweise 5 bis 15 Gew.-%, bezogen auf die Komponente b). Der Anteil des Wassers richtet sich nach der angestrebten Rohdichte des Polyurethan-Hartschaumstoffes und beträgt im allgemeinen 2 bis 2,5 %.

d) Als Katalysatoren (d) zur Herstellung der Polyurethan-Hartschaumstoffe werden insbesondere Verbindungen verwendet, die die Reaktion der reaktiven Wasserstoffatome, insbesondere Hydroxylgruppen, enthaltenden Verbindungen der Komponente (b) mit den organischen, gegebenenfalls modifizierten Polyisocyanaten (a) stark beschleunigen.

Als Katalysator (d) geeignet sind stark basische Amine beispielsweise Amidine, wie 2,3-Dimethyl-3,4,5,6-tetrahydropyrimidin, tertiäre Amine, wie Triethylamin, Tributylamin, Dimethylcyclohexylamin, Dimethylbenzylamin, N-Methyl-, N-Ethyl-, N-Cyclohexylmorpholin, N,N,N',N'-Tetramethylethylendiamin, N,N,N',N'-Tetramethylbutandiamin, N,N,N',N'-Tetramethyl-hexandiamin-1,6, Pentamethyl-diethylentriamin, Tetramethyl-diaminoethylether, Bis(2-dimethylaminoethyl)ether, Bis-(dimethylaminopropyl)-harnstoff, Dimethylpiperazin, 1,2-Dimethyl-imidazol, 1-Aza-bicyclo-(3,3,0)-octan und vorzugsweise 1,4-Diaza-bi-cyclo-(2,2,2)-octan, und Alkanolaminverbindungen, wie Triethanolamin, Triisopropanolamin, N-Methyl- und N-Ethyl-diethanolamin, N,N-Dimethylaminoethoxyethanol, N,N,N'-Trimethylaminoethyl-ethamolamin und Dimethylethanolamin.

Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen.

Falls in den Hartschaumstoff Isocyanuratgruppen eingebaut werden sollen, werden spezielle Katalysatoren benötigt. Als Isocyanurat-Katalysatoren werden üblicherweise Metallcarboxylate, insbesondere Kaliumacetat und dessen Lösungen, eingesetzt. Die Katalysatoren können, je nach Erfordernis, allein oder in beliebigen Mischungen untereinander eingesetzt werden.

Vorzugsweise verwendet werden 0,001 bis 7 Gew.-%, insbesondere 0,05 bis 5 Gew.-%, Katalysator bzw. Katalysatorkombination, bezogen auf das Gewicht der Komponente (b).

e) Der Reaktionsmischung zur Herstellung der Polyurethan-Hartschaumstoffe können gegebenenfalls auch noch Hilfsmittel und/oder Zusatzstoffe (e) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Rizinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Rizinusöl- bzw. Rizinolsäureester, Türkischrotöl und Erdnussöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im Einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) und (b), einverleibt, wobei jedoch der Gehalt an Matten, Vliesen und Geweben aus natürlichen und synthetischen Fasern Werte bis 80 Gew.-% erreichen kann.

Als Flammschutzmittel können organische Phosphorsäure- und oder Phosphonsäureester zur Anwendung kommen. Vorzugsweise werden gegenüber Isocyanatgruppen nicht reaktive Verbindungen eingesetzt. Auch Chlor enthaltende Phosphorsäureester gehören zu den bevorzugten Verbindungen. Geeignete Flammschutzmittel sind beispielsweise Tris-(2-chlorpropyl)phosphat, Triethylphosphat, Diphenylkresylphosphat, Diethylethanphosphinat, Trikresylphosphat, Tris-(2-chlorethyl)phosphat, Tris(1,3-dichlorpropyl)phosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole.

Daneben können auch Brom enthaltende Flammschutzmittel zum Einsatz kommen. Als Brom enthaltende Flammschutzmittel werden vorzugsweise Verbindungen eingesetzt, die gegenüber der Isocyanatgruppe reaktiv sind. Derartige Verbindungen sind beispielsweise Ester der Tetrabromphthalsäure mit aliphatischen Diolen und Alkoxylierungsprodukte des Dibrombutendiols. Auch Verbindungen, die sich aus der Reihe der bromierten, OH-Gruppen enthaltenden Neopentylverbindungen ableiten, können zur Anwendung kommen.

Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanat-polyadditionsprodukte verwendet werden. Im Allgemeinen hat es sich als zweckmäßig erwiesen, 5 bis 50 Gew.-Teile, vorzugsweise 5 bis 25 Gew.-Teile, der genannten Flammschutzmittel für jeweils 100 Gew.-Teile der Komponente (b) zu verwenden.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 3. Auflage, 1993 zu entnehmen.

Zur Herstellung der Polyurethan-Hartschaumstoffe werden die Polyisocyanate a) und die Polyolkomponente b) in solchen Mengen zur Umsetzung gebracht, dass der Isocyanatindex in einem Bereich zwischen 100 und 150, vorzugsweise zwischen 105 und 140, und besonders bevorzugt zwischen 110 und 130 liegt. Der Isocyanatindex ist das molare Verhältnis von Isocyanatgruppen zu mit Isocyanatgruppen reaktiven Gruppen, multipliziert mit 100.

Bevorzugt werden die erfindungsgemäßen Hartschaumstoffe auf kontinuierlich arbeitenden Doppelbandanlagen hergestellt. Hier werden mit einer Hochdruckmaschine die Polyol- und die Isocyanatkomponente dosiert und in einem Mischkopf vermischt. Dem Polyolgemisch können zuvor mit separaten Pumpen Katalysatoren und/oder Treibmittel zudosiert werden. Das Reaktionsgemisch wird kontinuierlich auf die untere Deckschicht aufgetragen. Die untere Deckschicht mit dem Reaktionsgemisch und die obere Deckschicht laufen in das Doppelband ein. Hier schäumt das Reaktionsgemisch auf und härtet aus. Nach dem Verlassen des Doppelbandes wird der endlose Strang in den gewünschten Abmessungen zerschnitten. Auf diese Weise können Sandwichelemente mit metallischen Deckschichten oder Dämmelemente mit flexiblen Deckschichten hergestellt werden.

Die Ausgangskomponenten werden bei einer Temperatur von 15 bis 90 °C, vorzugsweise von 20 bis 60 °C, insbesondere von 20 bis 45 °C, gemischt. Das Reaktionsgemisch kann mit Hoch- oder Niederdruckdosiermaschinen in geschlossene Stützwerkzeuge gegossen werden. Nach dieser Technologie werden z.B. diskontinuierliche Sandwichelemente gefertigt.

Weiterer Gegenstand der Erfindung sind Polyurethan-Hartschaumstoffe, hergestellt nach dem erfindungsgemäßen Verfahren.

Die nach dem erfindungsgemäßen Verfahren hergestellten Polyurethan-Hartschaumstoffe weisen eine Dichte von 0,02 bis 0,75 g/cm³, vorzugsweise von 0,025 bis 0,24 g/cm³ und insbesondere von 0,03 bis 0,1 g/cm³ auf. Besonders eignen sie sich als Isolationsmaterial im Bau- und Kühlmöbelsektor, z.B. als Zwischenschicht für Sandwichelemente oder zum Ausschäumen von Kühlschrank- und Kühltruhengehäusen.

Die nach dem erfindungsgemäßen Verfahren hergestellten PUR-Hartschaumstoffe weisen gute Oberflächen mit wenigen Fehlstellen, gute Haftung, und eine gute Härtung auf. Die Polyolkomponente (b) weist gleichzeitig eine gute Lagerstabilität bei 20°C bzw. 5°C über mehrere Monate auf.

Die Erfindung soll an den nachfolgenden Beispielen näher erläutert werden: Vergleichsbeispiel 1

Aus 56,0 Gew.-Teilen eines Polyetheralkohols mit einer Hydroxylzahl von 490 mgKOH/g, basierend auf Propylenoxid und Mischung aus Sucrose und Glyzerin als Starter,
8,0 Gew.-Teilen eines Polyetheralkohols mit einer Hydroxylzahl von 770 mgKOH/g, basierend auf Propylenoxid und Ethylendiamin als Starter,
20 Gew.-Teilen Rizinusöl
12 Gew.-Teilen Tris-2-Chlorisopropylphosphat,
2 Gew.-Teilen Tegostab^{®} B8462 der Firma Goldschmidt,
0,5 Gew.-Teilen Kaliumacetat in Ethylenglykol 50%ige Lösung und
2,1 Gew.-Teilen Wasser
wurde durch Vermischen eine Polyolkomponente hergestellt. Die Polyolkomponente ist bei 20 °C, sowie bei 5°C nicht stabil und separiert nach 24 Stunden in zwei Phasen.

### Vergleichsbeispiel 2

Aus 75,4 Gew.-Teilen eines Polyetheralkohols mit einer Hydroxylzahl von 490 mgKOH/g, basierend auf Propylenoxid und Mischung aus Sucrose und Glyzerin als Starter,
8,0 Gew.-Teilen eines Polyetheralkohols mit einer Hydroxylzahl von 770 mgKOH/g, basierend auf Propylenoxid und Ethylendiamin als Starter,
12 Gew.-Teilen Tris-2-Chlorisopropylphosphat,
2 Gew.-Teilen Tegostab^{®} B8462 der Firma Goldschmidt,
0,5 Gew.-Teilen Kaliumacetat in Ethylenglykol 50%ige Lösung und
2,1 Gew.-Teilen Wasser
wurde durch Vermischen eine Polyolkomponente hergestellt.

Die Polyolkomponente ist bei 20 °C, sowie bei 5°C stabil. Diese wurde mit einem Polymer-MDI mit einem NCO-Gehalt von 30,9 Gew.-% (Lupranat^{®} M50 der BASF SE) in Anwesenheit von n-Pentan (6 Gew.-Teile), Dimethylcyclohexylamin und Wasser, bei einem Isocyanatindex von 120 umgesetzt. Die Mengen an Dimethylcyclohexylamin und Wasser wurden so ausgewählt, dass die Gelzeit 45 Sekunden betrug und der resultierende Schaum eine Dichte von 36 g/l aufwies.

### Beispiel 1

Aus 55,4 Gew.-Teilen eines Polyetheralkohols mit einer Hydroxylzahl von 490 mg KOH/g, basierend auf Propylenoxid und Mischung aus Sucrose und Glyzerin als Starter,
8,0 Gew.-Teilen eines Polyetheralkohols mit einer Hydroxylzahl von 770 mg KOH/g, basierend auf Propylenoxid und Ethylendiamin als Starter,
20 Gew.-Teilen eines Polyetheralkohols mit einer Hydroxylzahl von 400 mg KOH/g, basierend auf Propylenoxid und Glyzerin als Starter,
12 Gew.-Teilen Tris-2-Chlorisopropylphosphat,
2 Gew.-Teilen Tegostab^{®} B8462 der Firma Goldschmidt,
0,5 Gew.-Teilen Kaliumacetat in Ethylenglykol 50%ige Lösung und
2,1 Gew.-Teilen Wasser
wurde durch Vermischen eine Polyolkomponente hergestellt.

Die Polyolkomponente ist bei 20 °C, sowie bei 5°C über mehrere Monate stabil. Diese wurde mit einem Polymer-MDI mit einem NCO-Gehalt von 30,9 Gew.-% (Lupranat^{®} M50 der BASF SE) in Anwesenheit von n-Pentan (6 Gew.-Teile), Dimethylcyclohexylamin und Wasser, bei einem Isocyanatindex von 120 umgesetzt. Die Mengen an Dimethylcyclohexylamin und Wasser wurden so ausgewählt, dass die Gelzeit 45 Sekunden betrug und der resultierende Schaum eine Dichte von 36 g/l aufwies.

### Vergleichsbeispiel 3

Aus 55,4 Gew.-Teilen eines Polyetheralkohols mit einer Hydroxylzahl von 490 mg KOH/g, basierend auf Propylenoxid und Mischung aus Sucrose und Glyzerin als Starter,
8,0 Gew.-Teilen eines Polyetheralkohols mit einer Hydroxylzahl von 770 mg KOH/g, basierend auf Propylenoxid und Ethylendiamin als Starter,
10 Gew.-Teilen eines Polyetheralkohols mit einer Hydroxylzahl von 400 mg KOH/g, basierend auf Propylenoxid und Glyzerin als Starter,
10 Gew.-Teilen eines Polyesteralkohols mit einer Hydroxylzahl von 210 mg KOH/g, hergestellt durch Umsetzung von Phthalsäureanhydrid, Ölsäure, Diethylenglycol und Monoethylenglycol,
12 Gew.-Teilen Tris-2-Chlorisopropylphosphat,
2 Gew.-Teilen Tegostab^{®} B8462 der Firma Goldschmidt,
0,5 Gew.-Teilen Kaliumacetat in Ethylenglykol 50%ige Lösung und
2,1 Gew.-Teilen Wasser
wurde durch Vermischen eine Polyolkomponente hergestellt.

Die Polyolkomponente ist bei 20 °C, sowie bei 5°C Monate lang stabil. Diese wurde mit einem Polymer-MDI mit einem NCO-Gehalt von 30,9 Gew.-% (Lupranat^{®} M50 der BASF SE) in Anwesenheit von n-Pentan (6 Gew.-Teile), Dimethylcyclohexylamin und Wasser, bei einem Isocyanatindex von 120 umgesetzt. Die Mengen an Dimethylcyclohexylamin und Wasser wurden so ausgewählt, dass die Gelzeit 45 Sekunden betrug und der resultierende Schaum eine Dichte von 36 g/l aufwies.

Die Härtung der hergestellten PU-Schäume wurde mit dem Bolzentest ermittelt. Dazu wird 3, 4, 5 und 6 Minuten nach Vermischung der Komponenten in einem Polystyrol-Becher ein Stahlbolzen mit einer Kugelkalotte von 10 mm Radius mit einer Zug/Druckprüfmaschine 10 mm tief in den entstandenen Schaumpilz eingedrückt. Die erforderliche Maximalkraft in N ist ein Maß für die Härtung des Schaumstoffs. Angegeben ist die Summe der Härtung nach 3, 4, 5 und 6 Minuten.

Für die Haftungsversuche wurden Sandwichelemente (200×200×80 mm) mit metallischen Deckschichten im Labor in einer geschlossenen beheizten Form geschäumt. Die Temperatur der Form betrug 40 °C, die Gesamtdichte des Schaums betrug 36 g/l. Nach Aushärtung des Systems wurden Prüfkörper der Abmessung 100×100×80 mm gesägt und die Haftung des Schaums zur Deckschicht (Zugfestigkeit in Tabelle 1) nach DIN EN ISO 527-1 / DIN 53292 bestimmt.

Die Häufigkeit von Oberflächendefekten wurde durch eine optische Methode quantitativ bestimmt. Dafür wurde in einem Abstand von einem Millimeter zur unteren Deckschicht, das heißt der Deckschicht, auf der die Polyurethan-Reaktionslösung im Doppelbandverfahren aufgetragen wurde, eine Ebene in eine Schaumprobe gelegt und überstehendes Material abgetrennt.

Bei der quantitativen Beurteilung der Oberfläche wurde die Oberfläche des Schaums von rechts und danach von links beleuchtet und jeweils fotografiert. Die Bilder wurden überlagert und mit einer Bildanalyse-Software analysiert. Die Fehlstellen an der Oberfläche erscheinen dabei als schwarze Flächen. Der Prozentsatz der schwarzen Flächen an der gesamten Oberfläche ist ein Maß für die Häufigkeit von Oberflächendefekten des Schaums.

Des Weiteren erfolgte eine zusätzliche qualitative Beurteilung der Oberflächenbeschaffenheit der Schäume, wobei die Deckschicht von einer 1m×2m großen Schaumprobe entfernt wurde und die Oberfläche visuell beurteilt wurde.

Die Ergebnisse sind in Tabelle 1 dargestellt.

**Tabelle 1**

| | Vergleichsbeispiel 1 | Vergleichsbeispiel 2 | Beispiel 1 | Vergleichsbeispiel 3 |
|---|---|---|---|---|
| Stabilität der Polyolkomponente bei 20°C | unstabil | stabil | stabil | stabil |
| Stabilität der Polyolkomponente bei 5°C | unstabil | stabil | stabil | stabil |
| | | | | |
| Summe der Härtung nach 3, 4, 5 und 6 min [N] | | 344 | 352 | 340 |
| | | | | |
| Zugfestigkeit [N/mm²] | | 0,22 | 0,32 | 0,29 |
| | | | | |
| Oberfläche(qualitativ) | | schlecht | sehr gut | sehr gut |
| Oberfläche(quantitativ) [%] | | 9,1 | 0,7 | 1,2 |

Die Ergebnisse in der Tabelle 1 zeigen, dass die Stabilität der Polyolkomponente bei 20°C und 5°C gut ist und die Oberflächeneigenschaften, die Aushärtung und die Haftung der durch das erfindungsgemäße Verfahren hergestellten Schaumstoffe sehr gut sind.

Die Lagerstabilität der nach dem erfindungsgemäßen Verfahren verwendeten Polyolkomponenten ist sehr gut; zu dem Beispiel 1 entsprechende Polyolkomponenten mit jeweils 5 Gew.-Teilen Wasser sind sogar ebenfalls bei 20 °C sowie bei 5°C Monate lang stabil.

Die gemäß Vergleichsbeispiel 2 erhaltenen PU-Schäume weisen eine deutlich geringere Zugfestigkeit und eine schlechtere Oberflächenbeschaffenheit auf.

## Patentansprüche

1. Verfahren zur Herstellung von Polyurethan-Hartschaumstoffen durch Umsetzung von
a) organischen Polyisocyanaten mit
b) Verbindungen mit mindestens zwei mit Isocycanatgruppen reaktiven Wasserstoffatomen in Anwesenheit von
c) Treibmitteln,
d) Katalysatoren, sowie gegebenenfalls
e) Hilfsmitteln und Zusatzstoffen,
**dadurch gekennzeichnet, dass** als Komponente b) ein Gemisch bestehend aus
b1) 20 bis 60 Gew.-Teilen eines oder mehrerer hochfunktioneller Polyetheralkohole mit Funktionalitäten von 3,5 bis 5,5 und einer Hydroxylzahl von 400 bis 550 mg KOH/g und mit hydroxylgruppenhaltigen hochfunktionellen Verbindungen als Startsubstanzen,
b2) 5 bis 15 Gew.-Teilen eines oder mehrerer Polyetheralkohole auf Basis aliphatischer Amine mit Funktionalitäten von 4 und einer Hydroxylzahl von 470 bis 800 mg KOH/g,
b3) 10 bis 30 Gew.-Teilen eines oder mehrerer Polyetheralkohole mit Funktionalitäten von 2 bis 3 und einer Hydroxylzahl von 220 bis 430 mg KOH/g, und
b4) gegebenenfalls 1 bis 5 Gew.-Teilen Wasser
eingesetzt wird, wobei die Gewichtsteile b1) bis b4) der Polyolkomponente b) nicht 100 Gewichtsteile überschreiten.

2. Verfahren nach Anspruch 1, **dadurch gekennzeichnet, dass** die Polyetheralkohole b2) Funktionalitäten von 4 und eine Hydroxylzahl von 730 bis 800 mg KOH/g aufweisen.

3. Verfahren nach nach Anspruch 1 oder 2, **dadurch gekennzeichnet, dass** die Polyetheralkohole b3) Funktionalitäten von 3 und eine Hydroxylzahl von 380 bis 420 mg KOH/g aufweisen.

4. Verfahren nach einem der Ansprüche 1 bis3, **dadurch gekennzeichnet, dass** die Umsetzung bei einem Isocyanatindex von 100 bis 150 durchgeführt wird.

5. Verfahren nach einem der Ansprüche 1 bis 4, **dadurch gekennzeichnet, dass** als Treibmittel n-Pentan und/oder iso-Pentan eingesetzt wird.

6. Polyurethan-Hartschaumstoffe, hergestellt nach dem Verfahren gemäß Anspruch 1.

7. Polyolkomponente b) bestehend aus einem Gemisch aus
b1) 20 bis 60 Gew.-Teilen eines oder mehrerer hochfunktioneller Polyetheralkohole mit Funktionalitäten von 3,5 bis 5,5 und einer Hydroxylzahl von 400 bis 550 mg KOH/g und mit hydroxylgruppenhaltigen hochfunktionellen Verbindungen als Startsubstanzen,
b2) 5 bis 15 Gew.-Teilen eines oder mehrerer Polyetheralkohole auf Basis aliphatischer Amine mit Funktionalitäten von 4 und einer Hydroxylzahl von 470 bis 800 mg KOH/g,
b3) 10 bis 30 Gew.-Teilen eines oder mehrerer Polyetheralkohole mit Funktionalitäten von 2 bis 3 und einer Hydroxylzahl von 220 bis 430 mg KOH/g, und
b4) gegebenenfalls 1 bis 5 Gew.-Teilen Wasser,
wobei die Gewichtsteile b1) bis b4) des Polyols b) nicht 100 Gewichtsteile überschreiten.

## Claims

1. A process for producing rigid polyurethane foams by reacting
a) organic polyisocyanates with
b) compounds having at least two hydrogen atoms which are reactive toward isocyanate groups in the presence of
c) blowing agents,
d) catalysts and optionally
e) auxiliaries and additives,
wherein a mixture consisting of
b1) from 20 to 60 parts by weight of one or more high-functionality polyether alcohols having functionalities of from 3.5 to 5.5 and a hydroxyl number of from 400 to 550 mg KOH/g and having hydroxyl-containing high-functionality compounds as starter substances,
b2) from 5 to 15 parts by weight of one or more polyether alcohols based on aliphatic amines and having functionalities of 4 and a hydroxyl number of from 470 to 800 mg KOH/g,
b3) from 10 to 30 parts by weight of one or more polyether alcohols having functionalities of from 2 to 3 and a hydroxyl number of from 220 to 430 mg KOH/g, and
b4) optionally from 1 to 5 parts by weight of water
is used as component b), where the parts by weight of b1) to b4) in the polyol component b) do not exceed 100 parts by weight.

2. The process according to claim 1, wherein the polyether alcohols b2) have functionalities of 4 and a hydroxyl number of from 730 to 800 mg KOH/g.

3. The process according to claim 1 or 2, wherein the polyether alcohols b3) have functionalities of 3 and a hydroxyl number of from 380 to 420 mg KOH/g.

4. The process according to any of claims 1 to 3, wherein the reaction is carried out at an isocyanate index of from 100 to 150.

5. The process according to any of claims 1 to 4, wherein n-pentane and/or isopentane are used as blowing agent.

6. A rigid polyurethane foam produced by the process according to claim 1.

7. A polyol component b) consisting of a mixture of
b1) from 20 to 60 parts by weight of one or more high-functionality polyether alcohols having functionalities of from 3.5 to 5.5 and a hydroxyl number of from 400 to 550 mg KOH/g and having hydroxyl-containing high-functionality compounds as starter substances,
b2) from 5 to 15 parts by weight of one or more polyether alcohols based on aliphatic amines and having functionalities of 4 and a hydroxyl number of from 470 to 800 mg KOH/g,
b3) from 10 to 30 parts by weight of one or more polyether alcohols having functionalities of from 2 to 3 and a hydroxyl number of from 220 to 430 mg KOH/g, and
b4) optionally from 1 to 5 parts by weight of water,
where the parts by weight of b1) to b4) in the polyol b) do not exceed 100 parts by weight.

## Revendications

1. Procédé pour la préparation de mousses dures de polyuréthane par transformation
a) de polyisocyanates organiques avec
b) des composés présentant au moins deux atomes d'hydrogène réactifs avec les groupes isocyanate, en présence
c) d'agents gonflants,
d) de catalyseurs ainsi que le cas échéant
e) d'adjuvants et d'additifs,
**caractérisé en ce qu'**on utilise, comme composant b), un mélange constitué par
b1) 20 à 60 parties en poids d'un ou de plusieurs polyétheralcools de fonctionnalité élevée, présentant des fonctionnalités de 3,5 à 5,5 et un indice d'hydroxyle de 400 à 550 mg de KOH/g et présentant des composés de fonctionnalité élevée, contenant des groupes hydroxyle comme substances de départ,
b2) 5 à 15 parties en poids d'un ou de plusieurs polyétheralcools à base d'amines aliphatiques présentant des fonctionnalités de 4 et un indice d'hydroxyle de 470 à 800 mg de KOH/g,
b3) 10 à 30 parties en poids d'un ou de plusieurs polyétheralcools présentant des fonctionnalités de 2 à 3 et un indice d'hydroxyle de 220 à 430 mg de KOH/g,
b4) le cas échéant 1 à 5 parties en poids d'eau,
les parties en poids b1) à b4) du composant polyol b) ne dépassant pas 100 parties en poids.

2. Procédé selon la revendication 1, **caractérisé en ce que** les polyétheralcools b2) présentent des fonctionnalités de 4 et un indice d'hydroxyle de 730 à 800 mg KOH/g.

3. Procédé selon la revendication 1 ou 2, **caractérisé en ce que** les polyétheralcools b3) présentent des fonctionnalités de 3 et un indice d'hydroxyle de 380 à 420 mg KOH/g.

4. Procédé selon l'une quelconque des revendications 1 à 3, **caractérisé en ce que** la transformation est réalisée à un indice d'isocyanate de 100 à 150.

5. Procédé selon l'une quelconque des revendications 1 à 4, **caractérisé en ce qu'**on utilise, comme agent gonflant, du n-pentane et/ou de l'isopentane.

6. Mousses dures de polyuréthane, préparées selon le procédé selon la revendication 1.

7. Composant polyol b), constitué par un mélange de
b1) 20 à 60 parties en poids d'un ou de plusieurs polyétheralcools de fonctionnalité élevée, présentant des fonctionnalités de 3,5 à 5,5 et un indice d'hydroxyle de 400 à 550 mg de KOH/g et présentant des composés de fonctionnalité élevée, contenant des groupes hydroxyle comme substances de départ,
b2) 5 à 15 parties en poids d'un ou de plusieurs polyétheralcools à base d'amines aliphatiques présentant des fonctionnalités de 4 et un indice d'hydroxyle de 470 à 800 mg de KOH/g,
b3) 10 à 30 parties en poids d'un ou de plusieurs polyétheralcools présentant des fonctionnalités de 2 à 3 et un indice d'hydroxyle de 220 à 430 mg de KOH/g,
b4) le cas échéant 1 à 5 parties en poids d'eau,
les parties en poids b1) à b4) du polyol b) ne dépassant pas 100 parties en poids.
